# FASCICULE DE BREVET EUROPEEN

(11) **EP 0 700 709 B1**
(45) Date de publication et mention de la délivrance du brevet: **16.01.2002**
(21) Numéro de dépôt: 95401914.7
(22) Date de dépôt: 18.08.1995
(51) Int. Cl.: B01D 53/22

(54) **Procédé et installation de production d'un gaz par une cascade de membranes à températures différentes**
Verfahren und Vorrichtung zur Herstellung eines Gases in einer Kaskade von Membranen mit unterschiedlichen Arbeitstemperaturen
Process and device for producing a gas using a cascade of membranes working at different temperatures

(30) Priorité: 12.09.1994 FR 9410851
(43) Date de publication de la demande: 13.03.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Willemot, Antoine, F-92330 Sceaux (FR); Gelot, Jean-Louis, F-78990 Elancourt (FR)
(74) Mandataire: Le Moenner, Gabriel

(56) Documents cités:
- EP-A- 0 521 784
- EP-A- 0 586 018
- US-A- 5 306 331

## Description

L'invention concerne la production ou séparation de gaz par membranes selon la revendication 1 et une installation selon la revendication 10. L'invention s'applique tout particulièrement aux cas où il est nécessaire de produire un gaz, par exemple de l'azote, de haute pureté.

La production de gaz (notamment l'azote) par des membranes s'est considérablement développée ces dernières années, partout dans le monde, en complément de la production traditionnelle par voie cryogenique, car elle présente les avantages suivants :
- Une excellente sécurité d'approvisionnement;
- De faibles coûts de production;
- La possibilité de fournir, à des coûts très attractifs, selon les applications considérées, des gaz de pureté adaptée.

Le principe est que, sous l'effet d'une différence de pression partielle de part et d'autre de la membrane, on obtient, côté perméat, un mélange à basse pression, enrichi en composants les plus perméables et en sortie de membrane (aussi appelée côté "résidu" ou coté "rejet"), un mélange à une pression proche de la pression d'alimentation (du mélange entrant) et qui est enrichi en composants les moins perméables.

On utilise ainsi pour produire de l'azote (souvent qualifié de "impur") à partir d'air, des membranes semi-perméables présentant de bonnes propriétés de séparation de l'oxygène par rapport à l'azote (sélectivité), par exemple du type polyimide, le mélange enrichi en oxygène étant obtenu côté perméat. Ces membranes sont souvent qualifiées de membranes "azote".

Pour ce qui est de la production d'hydrogène ou de CO, on procède le plus souvent à une récupération à partir de mélanges issus de certaines industries, que l'on sépare sur des membranes semi-perméables présentant de bonnes propriétés de séparation de l'hydrogène par rapport aux autres composants du mélange, par exemple du type polyaramide, le mélange enrichi en hydrogène étant obtenu côté perméat, le mélange enrichi selon les cas en hydrocarbures ou en CO étant obtenu du coté résiduaire de la membrane. Ces membranes sont souvent qualifiées de membranes "hydrogène".

Il apparait que les performances obtenues dépendront très largement des conditions d'utilisation de la membrane, telles que la température, la pression d'alimentation de la membrane, ou encore la teneur du mélange entrant en le composant que l'on souhaite extraire côté perméat.

On sait ainsi pour ce qui est de la température, qu'en augmentant la température de fonctionnement de la membrane, le plus souvent, la perméabilité et donc la productivité de la membrane augmentent, mais sa sélectivité (par exemple O₂/N₂) et donc le rendement se dégradent. On entend le plus souvent par l'expression "température de fonctionnement de la membrane ou du module membranaire" la température obtenue à l'intérieur de la membrane ou du module du fait de la température du gaz entrant qui y transite, avec parfois l'intervention supplémentaire d'un système extérieur de chauffe du module membranaire ou de maintien en température (enceinte thermostatée).

Ainsi, selon les cas, pour obtenir le niveau de performances requises, on chauffera le gaz entrant à plusieurs dizaines de degré, ou on maintiendra ce gaz à la température ambiante, ou encore dans certains cas on refroidira ce gaz en dessous de la température ambiante, voire en dessous de 0°C.

On rappelera ici, pour le cas de la production d'azote à partir d'air que le "rendement" de la membrane représente la proportion d'azote présente dans le mélange entrant que l'on retrouve à la sortie (résiduaire) de la membrane, la sélectivité O₂/N₂ de la membrane représente quant à elle le rapport des perméances (on utilise aussi souvent le terme perméabilités) de l'oxygène et de l'azote au travers de la membrane (sel. = Perm (O₂) / Perm (N₂)).

En considérant l'exemple de l'azote, des difficultés sont rencontrées lorsqu'il s'agit de produire de l'azote de haute pureté à fort débit (par exemple moins de 0,1 % d'impuretés résiduelles), tout en étant compétitif vis à vis de la voie de production cryogénique ou de la voie de production par adsorption préférentielle;

Il a été proposé (voir notamment les documents US-A-4 894 068, US-A-4 119 417, ou encore EP-A-521 784) de procéder à la séparation selon des installations multi-étagées, qui permettent une réduction de l'investissement et de l'énergie mise en oeuvre, par rapport à un procédé en un seul étage. Ces documents prévoient qu'il est alors avantageux d'effectuer un recyclage des perméats (ou des résiduaires selon le gaz recherché) aval vers les entrées des membranes placées en amont, ou encore le balayage du perméat d'un étage amont par le perméat d'un étage aval.

Les travaux effectués par la Demanderesse sur ce sujet, tels que notamment rapportés dans le document EP-A-521 784, ont dans un premier temps démontré qu'il était avantageux de procéder à une séparation sur un double étage de séparation, le premier étage de séparation présentant des performances moindres de celles du second étage, par exemple en faisant fonctionner le premier étage à une température supérieure à celle du second étage, ceci en combinaison avec un balayage du perméat du premier étage à l'aide du perméat du second étage.

Les travaux qu'a poursuivis la Demanderesse montrent que ces solutions, si elles représentent a priori un progrès vis à vis des classiques procédés à un étage, ne sont pas encore suffisamment compétitives, notamment en terme de coût de fonctionnement, pour les cas où il faut dimensionner des unités de grandes taille, pour lesquelles alors ces solutions ne peuvent rivaliser avec l'autre catégorie de production de gaz sur site qui est la production par adsorption préférentielle (PSA).

Le document EP-A-0 586 018 décrit un procédé de séparation membranaire d'un gaz, où après passage dans un premier séparateur, éliminant l'eau, et réfrigération avec de l'azote liquide, le gaz est passé dans plusieurs séparateurs membranaires.

Dans ce contexte, un objectif de la présente invention est de proposer un procédé amélioré de production d'un gaz, notamment d'azote, par voie membranaire.

La Demanderesse a mis en évidence le fait qu'il est possible d'améliorer les procédés de production existants, par la mise en oeuvre d'au moins deux séparateurs membranaires successifs, la température de fonctionnement du second étage étant largement inférieure à celle de fonctionnement du premier étage membranaire rencontré par le mélange entrant, et le perméat du second étage étant recyclé à l'entrée du premier étage.

Comme developpé ci-dessous dans le cadre d'exemples, cette configuration offre des performances améliorées par rapport à la technique du balayage des perméats.

D'autre part, le recyclage du second perméat "froid" à l'entrée du premier étage permet de réduire la quantité d'énergie nécessaire pour comprimer le mélange entrant, donc le dimensionnement du compresseur de gaz. On obtient donc de façon paradoxale et avantageuse une réduction possible de l'investissement tout en améliorant la sélectivité du système.

Ainsi, le procédé selon l'invention, de production par voie membranaire d'un gaz de haute pureté à partir d'un mélange entrant, selon lequel on fait passer le mélange entrant dans un premier séparateur membranaire fonctionnant à une première température de fonctionnement et l'on fait passer tout ou partie du mélange résiduaire issu de ce premier séparateur membranaire dans un second séparateur membranaire fonctionnant à une seconde température de fonctionnement, le mélange obtenu coté perméat du second séparateur étant recyclé à l'entrée du premier séparateur, se caractérise en ce que la première température de fonctionnement est supérieure d'au moins 40°C à la seconde température de fonctionnement.

Par "séparateur membranaire", on entend selon l'invention, une membrane ou module membranaire semi-perméable, le cas échéant un ensemble de plusieurs membranes (ou modules membranaires) semi-perméables montées en parallèle, présentant des propriétés de séparation du gaz que l'on souhaite extraire par rapport au mélange entrant dans le séparateur.

Ainsi, à titre d'exemple, on pourra utiliser, pour produire de l'azote de haute pureté à partir d'un mélange entrant qui est de l'air, des modules membranaires de type polyimide ou encore de type polyaramide.

On entend par "température de fonctionnement" selon l'invention, la notion rappelée plus haut dans la présente demande.

Selon une des mises en oeuvre de l'invention, le mélange entrant est de l'air et la concentration en azote du mélange gazeux obtenu coté résiduaire du second séparateur membranaire est supérieure à 99% volumiques, préférentiellement supérieure à 99,5 % volumiques, et plus préférentiellement supérieure à 99,9% volumiques.

Selon une des mises en oeuvre de l'invention, les membranes mises en oeuvre en second étage de séparation sont de type différent de celui des membranes mises en oeuvre en premier étage de séparation.

Selon une autre des mises en oeuvre de l'invention, les membranes mises en oeuvre en second étage sont de même type que celui des membranes mises en oeuvre en premier étage.

Le procédé selon l'invention prévoit donc d'effectuer un refroidissement sensible du mélange résiduaire issu du premier étage de séparation, avant son arrivée sur le second étage de séparation.

Il est à noter que ce refroidissement important peut être envisagé en toute sécurité dans cette cascade de séparateurs du fait que le gaz issu du premier étage est généralement très sec (point de rosée de -60°C, voire -70°C).

Une telle opération de refroidissement pourra alors par exemple être effectuée par des moyens classiques tels que froid mécanique, échangeur sur liquide cryogénique, ou encore opération de détente sur une turbine.

Mais la Demanderesse a mis en évidence une méthode particulièrement avantageuse pour effectuer cette opération de refroidissement, qui consiste à injecter de l'eau sous forme pulvérisée dans le perméat très sec issu du second étage de séparation, donnant lieu à l'évaporation de tout ou partie de cette eau dans le perméat (du fait de la marge existante par rapport au point de saturation), cette évaporation, endothermique, "pompant" une partie de l'énergie du perméat, ce qui entraîne un abaissement de la température de ce perméat. Ce flux perméat ainsi refroidi est alors envoyé vers un échangeur de gaz comprenant au moins deux voies, où il échange ses frigories avec le résiduaire issu de la première étape de séparation.

Il est d'ailleurs possible, et avantageux, d'asservir le débit d'injection d'eau dans le second perméat à la température du mélange entrant dans le second séparateur.

Un tel mode de refroidissement par injection d'eau pulvérisée, s'il a déjà été évoqué pour le refroidissement d'un air comprimé en sortie de compresseur (comme décrit dans le document EP-A-524435) représente dans le cas présent une coopération tout à fait attractive et performante entre le phénomène d'évaporation d'eau, consommateur d'énergie, et le multi-étage de séparation membranaire produisant un perméat de second étage très sec, offrant une marge de manoeuvre importante avant d'atteindre la saturation en eau.

Elle apporte avant tout un coût de fonctionnement et d'investissement incomparablement plus faible que celui des méthodes citées plus haut et traditionnellement utilisées dans le milieu de la séparation membranaire, l'eau représentant une source de "froid" comparativement presque gratuite.

Comme il apparaîtra clairement à l'homme du métier, dans tous les cas déjà cités, le mélange entrant, avant son arrivée sur le premier étage de séparation, subit une opération classique pour ce domaine de la séparation membranaire, de conditionnement, permettant de réaliser des opérations telles que déshuilage, filtrage, séchage ou encore mise en température éventuelle du mélange.

D'autres caractéristiques et avantages de la présente invention ressortiront de la description suivante de modes de réalisation donnés à titre illustratif mais nullement limitatif, faite en relation avec les dessins annexés, sur lesquels :
- La figure 1 est une représentation schématique d'une installation bi-étagée convenant pour la mise en oeuvre du procédé selon l'invention.
- La figure 2 est une représentation schématique d'une installation bi-étagée convenant pour la mise en oeuvre du procédé selon l'invention, en vue d'obtenir à partir d'un mélange entrant d'air, un azote de haute pureté,.
- La figure 3 est une représentation schématique d'une installation bi-étagée convenant pour la mise en oeuvre du procédé selon l'invention, en vue d'obtenir à partir d'un mélange entrant d'air, un azote de haute pureté, et mettant en oeuvre un refroidissement par injection d'eau dans le perméat issu du second étage de séparation.
- Les figures 4 et 5 illustrent deux installations de l'état de l'art dans le domaine de la production membranaire d'azote à partir d'air, correspondant à la mise en oeuvre de deux étages de séparation identiques, avec respectivement un recyclage du perméat du second étage vers l'entrée du premier étage, et un balayage du perméat du premier étage à l'aide du perméat du second étage.

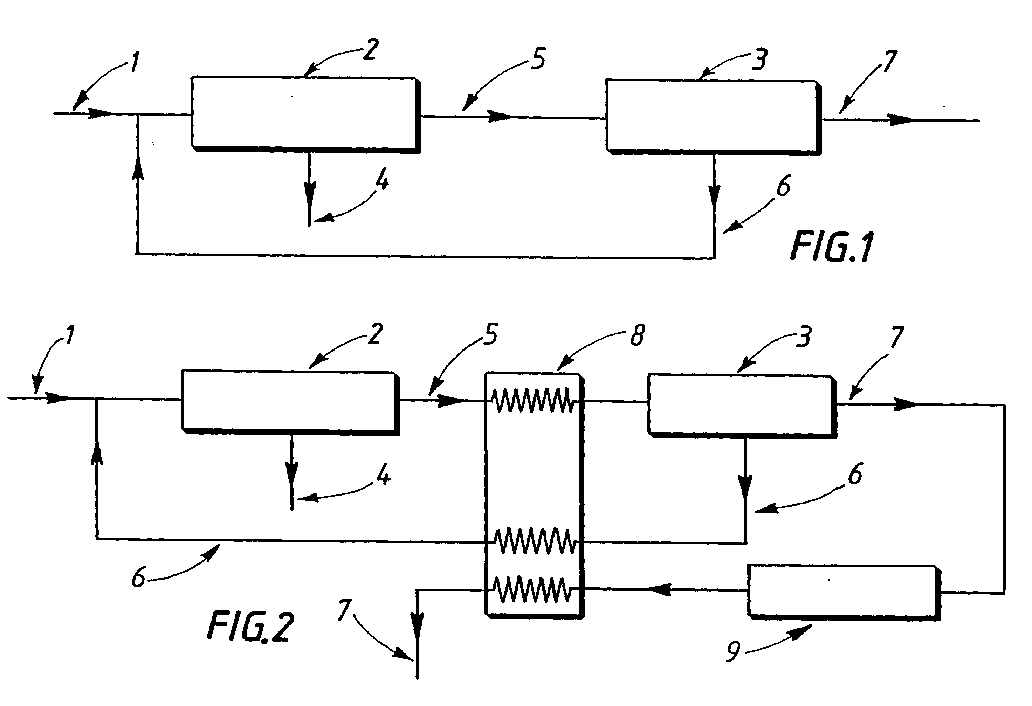

On reconnaît sur la figure 1 la présence d'un premier séparateur membranaire 2, alimenté par un mélange entrant 1, l'étape de conditionnement éventuelle du mélange 1 avant son arrivée sur le séparateur 2 n'a pas été représentée.

Le séparateur 2 donne lieu à la production côté perméat d'un mélange gazeux 4, et côté résiduaire d'un mélange gazeux 5, dirigé, dans le cas représenté, dans sa totalité vers l'entrée du second séparateur 3, qui à son tour donne lieu à la production côté perméat d'un mélange gazeux 6, et côté résiduaire d'un mélange gazeux 7.

Le mélange gazeux 6 est recyclé à l'entrée du premier étage 2.

Comme illustré plus loin dans le cadre d'exemples, les deux séparateurs membranaires 2 et 3 pourront être de type différent ou encore de même type.

La figure 2 illustre le cas d'une installation convenant pour la mise en oeuvre du procédé selon l'invention, dans le cas où l'on cherche à produire un mélange gazeux 7 de haute pureté en azote, à partir d'un mélange entrant 1 qui est de l'air. Les deux séparateurs 2 et 3, sont alors, pour l'exemple représenté, de même type, par exemple de type polyimide, la température de fonctionnement du séparateur 2 étant largement supérieure à celle du second séparateur 3.

Le compresseur d'air et l'étape de conditionnement du gaz entrant avant son arrivée sur le premier étage (comprenant des étapes telles que séchage, filtrage, déshuilage ou encore mise en température éventuelle du gaz) n'a pas été représentée sur la figure 2.

Le mélange gazeux 6 obtenu coté perméat du second séparateur est recyclé vers l'entrée du séparateur 2, préférentiellement en amont du compresseur d'air.

On reconnaît sur la figure 2 la présence d'un échangeur de chaleur 8, utilisé pour refroidir le mélange gazeux 5, le mélange gazeux 6, plus froid, libérant ses frigories dans l'échangeur avant son arrivée à l'entrée du séparateur 2. Le mélange gazeux 7 à haute teneur en azote, transite ici par un refroidisseur (par exemple du type cryogénique) avant de libérer ses frigories dans l'échangeur 8, puis son arrivée au poste utilisateur final (poste utilisateur non représenté sur la figure 2).

La figure 2 n'illustre qu'une des nombreuses variantes de réalisation de l'opération double de refroidissement du résiduaire issu du premier étage de séparation et de réchauffement et recyclage du perméat de second étage. On pourrait aussi par exemple envisager les solutions suivantes, non représentées mais décrites ici à titre illustratif :
- l'échangeur 8 n'est qu'à deux voies, une pour le refroidissement du résiduaire 5 et l'autre pour le résiduaire 7 qui y libère ses frigories après passage dans le refroidisseur;
- une autre solution où le refroidisseur 9 est disposé entre l'échangeur 8 et le séparateur 3, le résiduaire 5 étant donc refroidi, après son passage sur l'échangeur 8, qui est un échangeur trois voies, les deux autres voies étant utilisées pour le recyclage du perméat 6 vers l'entrée du premier étage et pour le résiduaire 7 qui y libère ses frigories avant d'être dirigé vers le poste utilisateur final;
- une autre solution est une variante de la solution précédente, où le résiduaire 7 ne transite pas par l'échangeur qui est alors un échangeur deux voies;
- on peut aussi envisager une solution sans échangeur 8, avec la présence d'un simple refroidisseur sur le trajet du résiduaire 5 entre les deux séparateurs 2 et 3, le perméat 6 étant alors recyclé directement vers l'entrée du premier étage, sans étape intermédiaire, de même que le résiduaire 7 est directement dirigé vers le poste utilisateur.

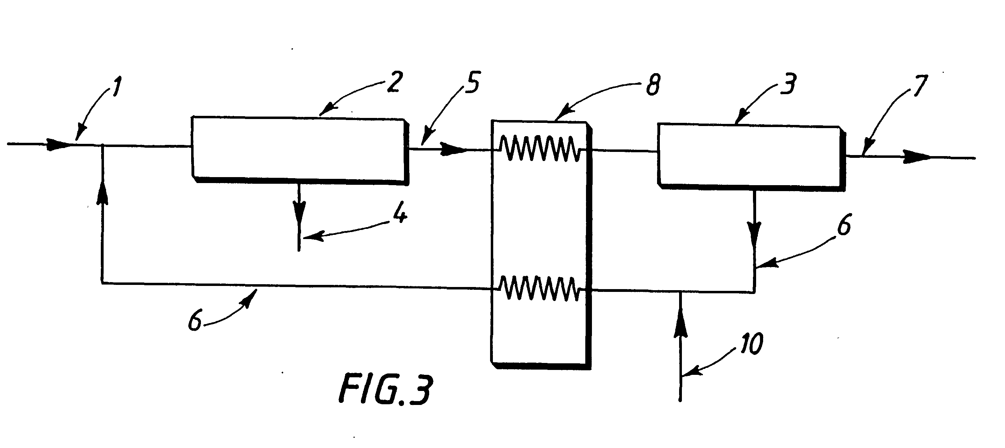

La figure 3 illustre une installation où est mis en oeuvre un refroidissement par injection d'eau : on reconnaît alors sur la figure 3 l'échangeur 8, à deux voies, une pour le résiduaire 5, l'autre pour le perméat 6 dans lequel a été injectée, avant son arrivée dans l'échangeur de l'eau 10 pulvérisée. L'eau injectée dans le perméat très sec issu du séparateur 3 va alors s'évaporer, en tout ou partie (l'évaporation pouvant le cas échéant se poursuivre dans l'échangeur), donnant lieu au refroidissement du perméat 6, qui échange alors ses frigories dans l'échangeur 8 avant d'être recyclé à l'entrée du premier étage.

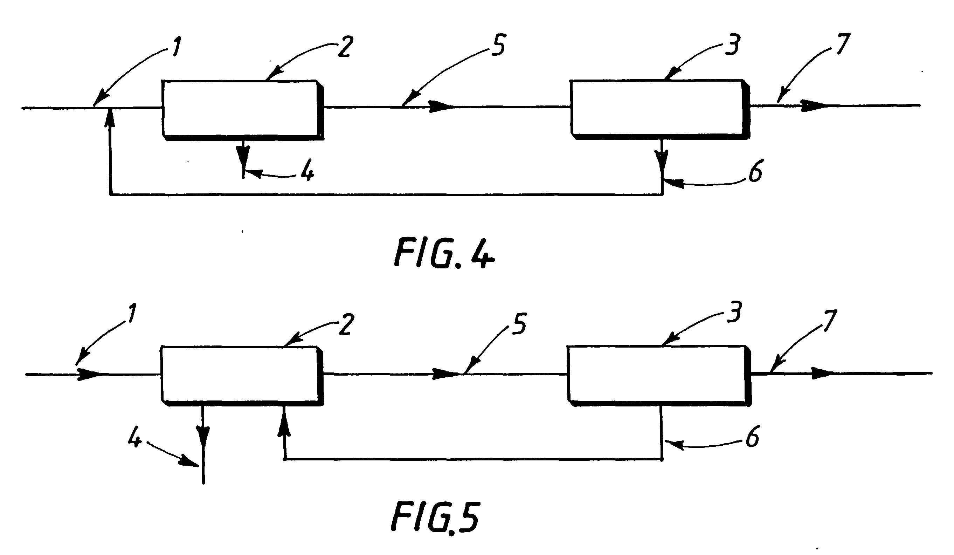

Les figures 4 et 5 illustrent deux installations de l'état de l'art dans le domaine de la production membranaire d'azote à partir d'air, correspondant à la mise en oeuvre de deux étages de séparation identiques 2 et 3, avec respectivement dans le premier cas, un recyclage du perméat 6 du second étage 3 vers l'entrée du premier étage 2, et dans le second cas, un balayage du perméat 4 du premier étage 2 à l'aide du perméat 6 du second étage 3.

Une installation telle que celle illustrée dans le cadre de la figure 2 a été testée pour la production d'un débit de 100 Nm³/h d'azote contenant une concentration résiduelle d'oxygène de 0,1 % volumiques, à partir d'un mélange entrant d'air.

Le tableau I rassemble les résultats de trois exemples (1A, 1B, 1C) de mise en oeuvre d'un double étage de séparation, mettant en oeuvre des membranes de type polyimide, la seconde colonne du tableau présentant un exemple comparatif où un seul étage de séparation est utilisé. On notera que pour chacun des trois exemples selon l'invention, utilisant un recyclage du perméat à l'entrée du premier étage, le "débit à comprimer" représente le total air + perméat recyclé.

### exemple comparatif :

- un seul étage de membrane polyimide, température de fonctionnement : 45°C;
- surface de membrane mise en oeuvre : 100

### exemple N°1A :

- température de fonctionnement du premier étage = 45°C, température de fonctionnement du second étage = 5°C;
- les deux étages mettent en oeuvre la même surface de membrane (Surf1=Surf2)

### exemple N°1B :

- température de fonctionnement du premier étage = 45°C, température de fonctionnement du second étage = 5°C;
- le second étage met en oeuvre deux fois plus de surface de membrane que le premier étage (Surf2=2 x Surf1)

### exemple N°1C :

- température de fonctionnement du premier étage = 45°C, température de fonctionnement du second étage = 5°C;
- le second étage met en oeuvre quatre fois plus de surface de membrane que le premier étage (Surf2=4 x Surf1)

On constate alors sur les résultats présentés que par rapport à l'exemple comparatif qui représente une base 100, tant pour la surface de membrane utilisée que pour le débit à comprimer (donc l'énergie de compression mise en oeuvre), l'exemple N° 1A offre, pour une surface de membrane comparable, une économie de débit à comprimer de près de 30%, l'exemple N°1B offre quant à lui pour une augmentation de surface de membrane d'à peine 10 % (ce qui intervient faiblement dans le coût d'investissement global de l'installation) une économie de débit à comprimer de plus de 35 %.

L'exemple 1C confirme cette tendance avec un gain sur la compression de plus de 40 %.

A titre de comparaison, le tableau II présente les résultats obtenus dans le cas de deux installations de l'état de l'art (figures 5 et 6), toujours par rapport à la même base 100 du monoétage à 45°C :

### exemple 2A - comparatif :

- double étage polyimide, fonctionnant à 45°C, les deux étages mettent en oeuvre la même surface de membrane;
- recyclage du second perméat à l'entrée du premier étage

### exemple 2B comparatif :

- double étage polyimide, fonctionnant à 45°C, les deux étages mettent en oeuvre la même surface de membrane;
- balayage du premier perméat à l'aide du second perméat

On constate à la lecture de ce tableau que l'économie sur la compression est infime, et non compensée par la diminution négligeable de surface de membrane mise en oeuvre, qui comme signalé plus haut intervient, pour de telles proportions, peu dans le coût global d'investissement.

Les tableaux III et IV (exemples 3A et 3B comparatifs s'inscrivant dans l'état de l'art, et les exemples 4A et 4B selon l'invention) présentent le même type d'étude comparative que celle présentée pour les tableaux I et II, mais avec cette fois la production d'un débit de 100 Nm³/h d'azote contenant une concentration résiduelle d'oxygène de 0,5 % volumiques, à partir d'un mélange entrant d'air.

Ces deux tableaux confirme toutes les conclusions déjà établies dans le cadre de la pureté à 0,1 %.

Le tableau V présente quant à lui une variante des résultats précédemment discutés dans le cadre des exemples 1A à 1C (tableau I) mais où cette fois, la différence de température entre les deux étages n'est que de 20 °C (exemples 5A et 5B).

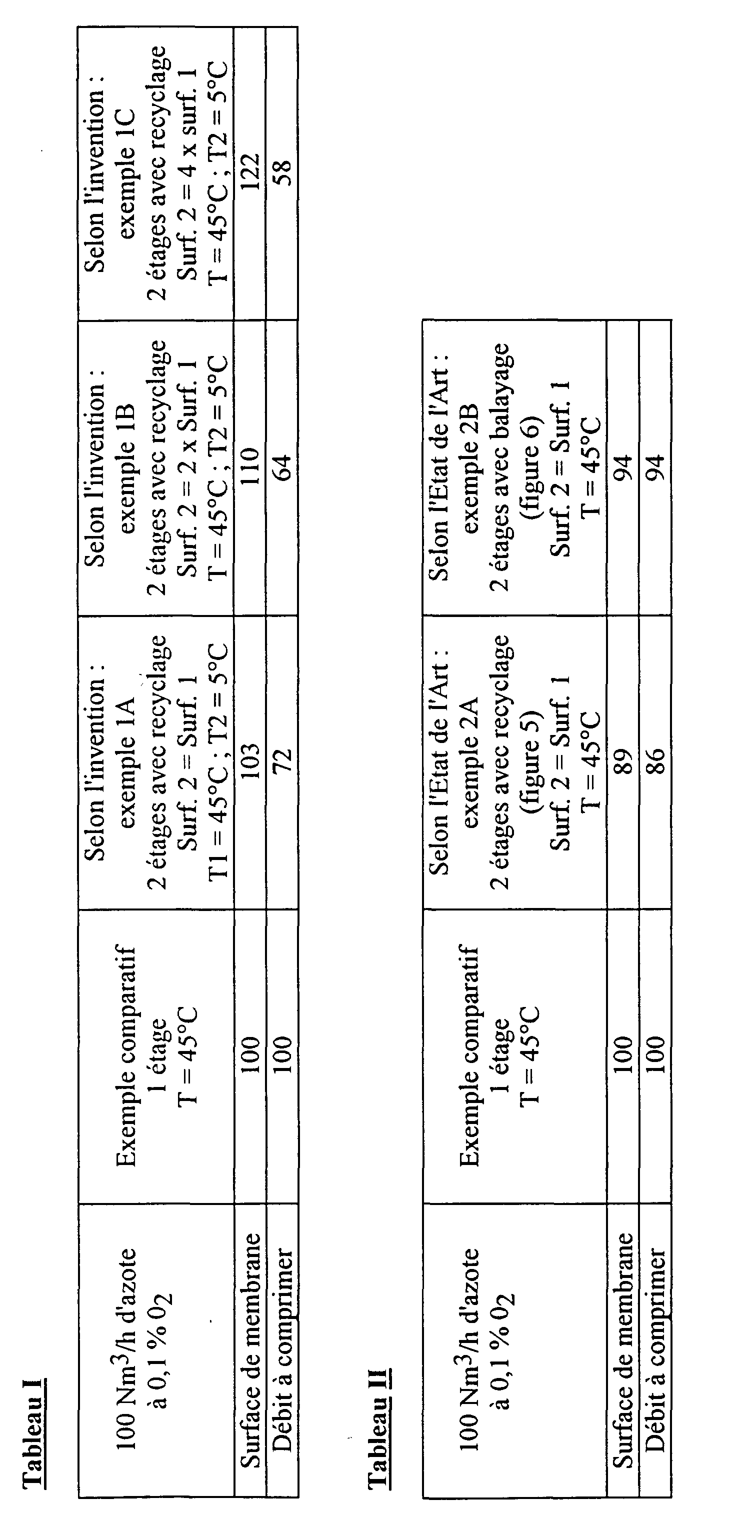

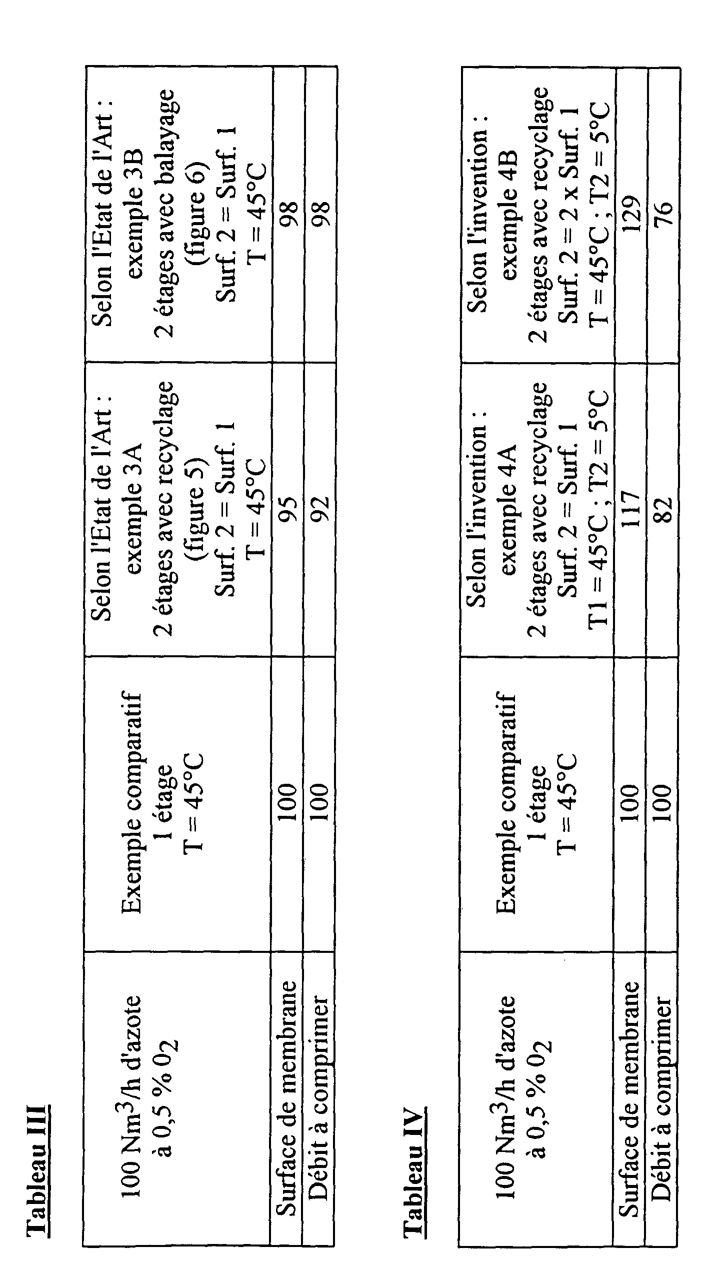

**Tableau V**

| 100 Nm³/h d'azote à 0,1 % O₂ | Exemple comparatif 1 étage T = 45°C | Selon l'invention : exemple 5A 2 étages avec recyclage Surf. 2 = Surf. 1 T1 = 45°C ; T2 = 25°C | Selon l'invention : exemple 5B 2 étages avec recyclage Surf. 2 = 2 x Surf. 1 T = 45°C ; T2 = 25°C |
|---|---|---|---|
| Surface de membrane | 100 | 93 | 98 |
| Débit à comprimer | 100 | 76 | 70 |

## Revendications

1. Procédé de production d'un gaz de haute pureté par voie membranaire à partir d'un mélange gazeux entrant contenant ledit gaz (1), selon lequel on procède à une séparation membranaire dudit gaz successivement dans au moins un premier (2) et un second (3) séparateurs membranaires en série de la façon suivante : on fait passer le mélange entrant dans le premier séparateur (2) fonctionnant à une première température de fonctionnement et l'on fait passer tout ou partie du mélange résiduaire (5) issu de ce premier séparateur dans le second séparateur (3) fonctionnant à une seconde température de fonctionnement, pour obtenir en sortie résiduaire du second séparateur ledit gaz de production, le mélange gazeux obtenu côté perméat du second séparateur étant recyclé à l'entrée du premier séparateur, **caractérisé en ce que** la première température de fonctionnement est supérieure d'au moins 40°C à la seconde température de fonctionnement.

2. Procédé selon la revendication 1, **caractérisé en ce que** l'on met en oeuvre pour le premier et le second séparateur des membranes de type différent.

3. Procédé selon la revendication 1, **caractérisé en ce que** l'on met en oeuvre pour le premier et le second séparateur des membranes de même type.

4. Procédé selon l'une des revendications 1 à 3, **caractérisé en ce que** le mélange résiduaire (5) issu du premier séparateur (2) est placé en relation d'échange de chaleur avec au moins un gaz refroidi (6; 7) issu du second séparateur (3).

5. Procédé selon la revendication 4, **caractérisé en ce que** le gaz refroidi est le mélange gazeux (6) obtenu du coté perméat du second séparateur dans lequel on injecte de l'eau (10) pulvérisée.

6. Procédé selon la revendication 4, **caractérisé en ce que** le gaz refroidi est le mélange résiduaire (7) du second séparateur (3).

7. Procédé selon l'une des revendications 1 à 6, **caractérisé en ce que** le mélange entrant est de l'air.

8. Procédé selon la revendication 7, **caractérisé en ce que** le gaz de production est l'azote.

9. Procédé selon la revendication 8, **caractérisé en ce que** la concentration en azote du mélange gazeux obtenu côté résiduaire du dernier séparateur est supérieure à 99% volumiques, préférentiellement supérieure à 99,5 % volumiques, et plus préférentiellement supérieure à 99,9% volumiques.

10. Installation de production d'azote de haute pureté par voie membranaire, en vue de l'alimentation d'un poste utilisateur pour la mise en oeuvre du procédé selon l'une des revendications 8 et 9, comprenant :
- un premier séparateur (2) membranaire,
- un second séparateur membranaire (3),
- une ligne de recyclage du mélange gazeux obtenu en sortie perméat du second séparateur à l'entrée du premier séparateur;
- un système refroidisseur (9) de gaz, disposé selon l'une des localisations suivantes :
a) sur une ligne reliant la sortie résiduaire (5) du premier séparateur (2) à l'entrée du second séparateur (3);
b) sur une ligne reliant la sortie résiduaire (7) du second séparateur (3) au poste utilisateur;
c) sur la ligne de recyclage reliant la sortie perméat (6) du second séparateur (3) à l'entrée du premier séparateur (2),
- un échangeur (8) à au moins deux voies, localisé de façon telle que
. dans le cas a), l'entrée d'une première voie de l'échangeur est reliée à la sortie résiduaire (5) du premier séparateur, la sortie de cette première voie étant reliée à l'entrée du refroidisseur (9), les autres voies de l'échangeur faisant transiter le mélange perméat (6) du second séparateur (3) vers l'entrée du premier séparateur (2), et/ou faire transiter le mélange résiduaire (7) issu du second séparateur (3) vers le dit poste utilisateur;
. dans le cas b), l'entrée d'une première voie de l'échangeur est reliée à la sortie du système refroidisseur, la sortie de cette première voie étant reliée au dit poste utilisateur, les autres voies de l'échangeur faisant transiter le mélange résiduaire (5) issu du premier séparateur entre le premier séparateur et le second séparateur, et le cas échéant le mélange perméat (6) issu du second séparateur (3) vers l'entrée du premier séparateur (2);
. dans le cas c), le système refroidisseur comporte des moyens d'injection d'eau pulvérisée dans le mélange perméat (6) issu du second séparateur (3), l'entrée d'une première voie de l'échangeur recevant le mélange perméat dans lequel a été injecté l'eau pulvérisée, la sortie de cette première voie étant reliée à l'entrée du premier séparateur (2), les autres voies de l'échangeur faisant transiter le mélange résiduaire (5) issu du premier séparateur (2) entre le premier séparateur et le second séparateur, et le cas échéant le mélange résiduaire (7) issu du second séparateur (3) entre ce second séparateur et le dit poste utilisateur.

## Patentansprüche

1. Verfahren zur Herstellung eines Gases von hoher Reinheit mit Hilfe von Membranen, wobei von einem einströmenden Gasgemisch, welches das besagte Gas (1) enthält, ausgegangen wird und gemäß dem man eine Abscheidung des besagten Gases mit Hilfe von Membranen sukzessive in wenigstens einem ersten (2) und einem zweiten (3) Membranabscheider, die hintereinander geschaltet sind, in folgender Weise durchführt:
Man lässt das eingebrachte Gemisch in den ersten Abscheider (2), der mit einer ersten Betriebstemperatur arbeitet, strömen, und man lässt das ganze restliche Gemisch (5) oder einen Teil davon, das von diesem ersten Abscheider abgegeben wird, in den zweiten Abscheider (3), der mit einer zweiten Betriebstemperatur arbeitet, strömen, um am Rückstandsausgang des zweiten Abscheiders das besagte hergestellte Gas zu erhalten, wobei das Gasgemisch, welches man an der Permeatseite des zweiten Abscheiders erhält, zu dem Eingang des ersten Abscheiders zurückgeführt wird,
**dadurch gekennzeichnet, dass** die erste Betriebstemperatur um wenigstens 40°C über der zweiten Betriebstemperatur liegt.

2. Verfahren nach Anspruch 1, **dadurch gekennzeichnet, dass** man für den ersten und den ersten Abscheider Membranen unterschiedlichen Typs verwendet.

3. Verfahren nach Anspruch 1, **dadurch gekennzeichnet, dass** man für den ersten und den zweiten Abscheider Membranen des gleichen Typs verwendet.

4. Verfahren nach einem der Ansprüche 1 bis 3, **dadurch gekennzeichnet, dass** das restliche Gemisch (5), das von dem ersten Abscheider (2) abgegeben wird, für einen Wärmeaustausch mit wenigstens einem abgekühlten Gas (6; 7), das von dem zweiten Abscheider (3) abgegeben wird, verwendet wird.

5. Verfahren nach Anspruch 4, **dadurch gekennzeichnet, dass** das abgekühlte Gas das Gasgemisch (6) ist, welches man auf der Permeatseite des zweiten Abscheiders erhält und in das man zerstäubtes Wasser (10) einspritzt.

6. Verfahren nach Anspruch 4, **dadurch gekennzeichnet, dass** das abgekühlte Gas das restliche Gemisch (7) des sekundären Abscheiders (3) ist.

7. Verfahren nach einem der Ansprüche 1 bis 6, **dadurch gekennzeichnet, dass** das eingebrachte Gemisch Luft ist.

8. Verfahren nach Anspruch 7, **dadurch gekennzeichnet, dass** das hergestellte Gas Stickstoff ist.

9. Verfahren nach Anspruch 8, **dadurch gekennzeichnet, dass** die Stickstoffkonzentration des Gasgemischs, das man auf der Rückstandsseite des letzten Abscheiders erhält, größer als 99 Volumenprozent, vorzugsweise höher als 99,5 Volumenprozent und am besten höher als 99,9 Volumenprozent ist.

10. Vorrichtung zur Herstellung von hochreinem Stickstoff mit Hilfe von Membranen für eine Weiterverarbeitungsanlage, um das Verfahren gemäß einem der Ansprüche 8 und 9 durchzuführen, umfassend:
- einen ersten, mit Membranen ausgerüsteten Abscheider (2),
- einen zweiten, mit Membranen ausgerüsteten Abscheider (3),
- eine Leitung zur Rückführung des Gasgemischs, das man am Permeatausgang des zweiten Abscheiders erhält, zu dem Eingang des ersten Abscheiders,
- ein System (9) zur Abkühlung des Gases, das gemäß einer der folgenden Lagebestimmungen angeordnet wird:
a) an einer Leitung, die den Rückstandsausgang (5) des ersten Abscheiders (2) mit dem Eingang des zweiten Abscheiders (3) verbindet;
b) an einer Leitung, die den Rückstandsausgang (7) des zweiten Abscheiders (3) mit der Weiterverarbeitungsanlage verbindet;
c)an einer Leitung für die Rückführung, die den Permeatausgang (6) des zweiten Abscheiders (3) mit dem Eingang des ersten Abscheiders (2) verbindet,
- einen Austauscher (8) mit wenigstens zwei Kanälen, der so angeordnet wird, dass:
• in dem Fall a) der Eingang eines ersten Kanals des Austauschers mit dem Rückstandsausgang (5) des ersten Abscheiders verbunden ist, wobei der Ausgang dieses ersten Kanals mit dem Eingang der Kühleinrichtung (9) verbunden ist und die übrigen Kanäle des Austauschers das Permeatgemisch (6) des zweiten Abscheiders (3) zum Eingang des ersten Abscheiders (2) leiten und / oder das restliche Gemisch (7), das von dem zweiten Abscheider (3) abgegeben wird, zu der besagten Verarbeitungsanlage leiten;
• in dem Fall b) der Eingang eines ersten Kanals des Austauschers mit dem Ausgang des Kühlsystems verbunden ist, wobei der Ausgang dieses ersten Kanals mit der besagten Weiterverarbeitungsanlage verbunden ist, die übrigen Kanäle des Austauschers das restliche Gemisch (5), das von dem ersten Abscheider abgegeben wird, zwischen den ersten Abscheider und dem zweiten Abscheider leiten und gegebenenfalls das Permeatgemisch (6), das von dem zweiten Abscheider (3) abgegeben wird, zu dem Eingang des ersten Abscheiders (2) leiten;
• in dem Fall c) das Kühlsystem Mittel zum Einspritzen von zerstäubtem Wasser in das Permeatgemisch (6), das von dem zweiten Abscheider (3) abgegeben wird, umfasst, wobei der Eingang eines ersten Kanals des Austauschers das Permeatgemisch erhält, in das das zerstäubte Wasser eingespritzt worden ist, der Ausgang dieses ersten Kanals mit dem Eingang des ersten Abscheiders (2) verbunden ist, die übrigen Kanäle des Austauschers das restliche Gemisch (5), das von dem ersten Abscheider (2) abgegeben wird, zwischen den ersten Abscheider und den zweiten Abscheider leiten und gegebenenfalls das restliche Gemisch (7), das von dem zweiten Abscheider (3) abgegeben wird, zwischen diesen zweiten Abscheider und die besagte Weiterverarbeitungsanlage leiten.

## Claims

1. Process for producing a high-purity gas by means of a membrane starting from an incoming gas mixture containing the said gas (1), in which a membrane separation of the said gas is carried out in succession in at least a first membrane separator (2) and a second membrane separator (3) in series, in the following manner: the incoming gas mixture is made to pass through the first separator (2) working at a first working temperature and all or some of the waste gas (5) coming from this first separator is made to pass through the second separator (3) working at a second working temperature, in order to obtain the said production gas as waste output from the second separator, the gas mixture obtained on the permeate side of the second separator being recycled into the inlet of the first separator, **characterized in that** the first working temperature is at least 40°C above the second working temperature.

2. Process according to Claim 1, **characterized in that** membranes of different type are used for the first and second separators.

3. Process according to Claim 1, **characterized in that** membranes of the same type are used for the first and second separators.

4. Process according to one of Claims 1 to 3, **characterized in that** the waste gas (5) coming from the first separator (2) is brought into heat exchange relationship with at least one cooled gas (6; 7) coming from the second separator (3).

5. Process according to Claim 4, **characterized in that** the cooled gas is the gas mixture (6) obtained from the permeate side of the second separator into which gas mixture sprayed water (10) is injected.

6. Process according to Claim 4, **characterized in that** the cooled gas is the waste gas (7) from the second separator (3).

7. Process according to one of Claims 1 to 6, **characterized in that** the incoming mixture is air.

8. Process according to Claim 7, **characterized in that** the production gas is nitrogen.

9. Process according to Claim 8, **characterized in that** the nitrogen concentration of the gas mixture obtained on the waste side of the last separator is greater than 99 vol%, preferably greater than 99.5 vol% and even more preferably greater than 99.9 vol%.

10. Plant for producing high-purity nitrogen by membrane means, in order to feed a user station for implementing the process according to either of Claims 8 and 9, comprising:
- a first membrane separator (2);
- a second membrane separator (3) ;
- a line for recycling the gas mixture obtained as the permeate output from the second separator into the inlet of the first separator;
- a gas-cooling system (9) placed at one of the following locations:
a) in a line connecting the outlet for the waste (5) from the first separator (2) to the inlet of the second separator (3);
b) in a line connecting the outlet for the waste (7) from the second separator (3) to the user station;
c) in the recycling line connecting the outlet for the permeate (6) from the second separator (3) to the inlet of the first separator (2);
- an at least two-way exchanger (8) placed in such a way that:
. in case a), the inlet of a first way of the exchanger is connected to the outlet for the waste (5) from the first separator, the outlet for this first way being connected to the inlet of the cooler (9), the other ways of the exchanger making the permeate mixture (6) from the second separator (3) pass to the inlet of the first separator (2) and/or making the waste mixture (7) coming from the second separator (3) pass to the said user station;
. in case b), the inlet of a first way of the exchanger is connected to the outlet of the cooler system, the outlet of this first way being connected to the said user station, the other ways of the exchanger making the waste mixture (5) coming from the first separator pass between the first separator and the second separator and, where appropriate, making the permeate mixture (6) coming from the second separator (3) pass to the inlet of the first separator (2);
. in case c) , the cooler system includes means for injecting sprayed water into the permeate mixture (6) coming from the second separator (3), the inlet of a first way of the exchanger receiving the permeate mixture into which the sprayed water has been injected, the outlet of this first way being connected to the inlet of the first separator (2), the other ways of the exchanger making the waste mixture (5) coming from the first separator (2) pass between the first separator and the second separator and, where appropriate, making the waste mixture (7) coming from the second separator (3) pass between this second separator and the said user station.
